Europäisches Patentamt

European Patent Office

Office européen des brevets

(11) Publication number: **0 261 877 B1**

(12) **EUROPEAN PATENT SPECIFICATION**

(45) Date of publication of patent specification: **16.12.92** (51) Int. Cl.5: **B29C 47/02**

(21) Application number: **87308238.2**

(22) Date of filing: **17.09.87**

(54) **Method for continuously extruding an elastomeric material on the interior of a continuous tubular woven fabric in a loom.**

(30) Priority: **25.09.86 CA 519073**

(43) Date of publication of application:
**30.03.88 Bulletin 88/13**

(45) Publication of the grant of the patent:
**16.12.92 Bulletin 92/51**

(84) Designated Contracting States:
**AT BE CH DE FR GB IT LI NL SE**

(56) References cited:
**DE-A- 1 475 708**
**DE-B- 2 556 491**
**US-A- 3 388 425**
**US-A- 4 490 316**
**US-A- 4 517 039**

(73) Proprietor: **MERCEDES TEXTILES LIMITED**
**16633 Hymus Boulevard**
**Kirkland, Ouebec H9H 4R9S2(CA)**

(72) Inventor: **Joncker, Helmut**
**PO Box 444**
**L'Original Ontario KOB 1KO(CA)**
Inventor: **McAlpine, Richard J.**
**RR 2 Box 39**
**Brownsburg Ouebec JOV 1AO(CA)**

(74) Representative: **Ackroyd, Robert et al**
**W.P. THOMPSON & CO. Eastcheap House**
**Central Approach**
**Letchworth, Hertfordshire SG6 3DS(GB)**

## Description

This invention relates to an apparatus and method for continuously applying an elastomeric material on the interior of a continuous tubular woven fabric in a loom.

The most common method in use to line tubular woven fabric involves cutting the tubular woven fabric into lengths of fifty, seventy-five, one hundred feet or up to two hundred feet. A pre-fabricated tubular liner having a diameter slightly smaller than the inside diameter of the woven tubular fabric and cut to substantially the same length as the tubular woven fabric is coated with an adhesive and pulled through the tubular woven fabric. Subsequently the adhesive has to be activated or cured, which is commonly done by steam pressure. This method has a number of drawbacks. The tubular woven fabric is cut into lengths and a continuous tubular woven fabric of substantial length cannot be lined with a continuous tubular liner. The step of inserting the tubular liner into the tubular woven fabric is separate from the process of waving the tubular woven fabric and separate from bonding both components to each other.

It has also been known for example in DE-A-1475708, to insert a thermoplastic or prevulcanized tubular liner inside a braided tubular fabric. The bonding process has still to be done subsequently.

A disadvantage of tubular liners no matter how they are inserted in a woven tubular fabric is that the tubular liner will be impressed with the undulations of the outer woven tubular fabric because of the steam pressure imposed. The surface of a woven tubular fabric is uneven and if a relatively thin liner is inserted into a woven tubular fabric the surface of the thin liner will follow the contours of the interior of the woven tubular fabric and provide an uneven liner surface. The more uneven the surface of the liner the higher the friction loss when passing fluids through the lined tubular woven fabric. If a thicker tubular liner is used to reduce undulations on the interior of the liner the friction loss will be decreased. However a thicker liner will increase the cost and weight of the lined hose.

By continuously applying an elastomeric material on the interior of a continuous tubular woven fabric in the loom a lined tubular woven fabric can be fabricated. By co-ordinating the application of elastomeric material with the inevitable interruptions and restarts of the weaving process, a lined tubular woven fabric can be produced in any desired length. By applying an elastomeric flowing material, a smooth surface is created on the interior of the woven tubular fabric. The elastomeric material bonds directly to the interior of the tubular woven fabric avoiding the need of an intermediate bonding material between the elastomeric material and the tubular woven fabric which is necessary in prior art hoses to bond the pre-extruded tubular elastomeric material and the tubular woven fabric. The elastomeric material may be applied thinly or thickly, partially or fully as desired to produce finished hose having different qualities or characteristics.

United States Patent 4,490,316 to Satzler discloses an apparatus and method for continuously extruding an elastomeric hose having a controlled internal size. The Satzler invention relates to extruded elastomeric hose employing two extruders, one for the inside and one for the outside. The invention herein relates to application of elastomer to the interior of a continuous woven tubular fabric. Further the Satzler invention does not disclose a die which is movable in and out of the hose in response to a weaving process. Removal of the die forming the outer extrusion is a technical impossibility in the Satzler teaching. Similarly, United States Patent 3,388,425 to Detter relates to an apparatus for coating the interior surfaces of a tubular article and teaches the use of a fixed mandrel within the tube for coating the interior of the tube while the instant invention relates to an insertable, retainable and removable extruder die used to form a continuous lined woven tubular article, which would not collapse upon removal of the die.

An apparatus according to the invention comprises,

loom means to provide a continuous tubular woven fabric,

extruder means capable of continuously extruding an elastomeric material, the extruder means including an extruder die means positioned adjacent the loom in a manner which enables the elastomeric material to be applied to the interior of the tubular woven fabric upon being formed in the loom,

motive means for creating relative movement between the extruder and the woven fabric,

sensing means for detecting stoppage of operation of said loom and of said extruder means, and

control means responsive to said sensing means directing the motive means to withdraw the extruder die means from a position adjacent the loom upon stoppage of operation of either the loom or the extruder means, the control means also directing the loom or the extruder means to cease operation upon cessation of operation of the other.

A method according to the invention comprises the steps of,

weaving a continuous tubular woven fabric in a loom,

extruding an elastomeric material by means of extruder means positioned adjacent the loom in a manner which causes the elastomeric material to be applied to the interior of the tubular woven fabric upon being formed in the loom,

sensing stoppage of operation of either the loom or the extruder means, and

directing the loom or the extruder to cease operation upon cessation of operation of the other.

An article according to the invention comprises a tubular woven fabric having an interior elastomeric layer extruded directly onto the interior of the tubular woven fabric.

Further preferred features of the invention are described in the dependent claims.

In the instant invention the elastomeric material is applied through an extruder which is suspended into the tubular fabric in the loom. The extruder and the loom are both electrically connected to a common control. If the loom stops for any reason the extruder will cease extruding and be withdrawn from the tubular fabric and loom. Similarly, if the loom is working and the extruder malfunctions the loom will be shut down and the extruder withdrawn from the tubular fabric and loom. The control mechanism is connected to the normal loom controls which provide for shut down of the loom when fibers break during the weaving process.

The process of weaving a continuous woven tubular fabric results in the production of twelve to twenty inches per minute depending on the type of loom and type of tubular woven fabric. In a continuous process of extruding elastomer on the interior of the tubular woven fabric the speed at which the elastomer is applied is correlated to the speed at which the loom is producing tubular woven fabric. The extruder required is a low capacity extruder since the speed of production is dictated by the speed of the loom in producing continuous woven tubular fabric.

In the drawings:

Figure 1 is a front elevation view of a loom with extruder support and motive means suspending the extruder in the weaving ring.

Figure 2 is a cross sectional view of the weaving ring and extruder die.

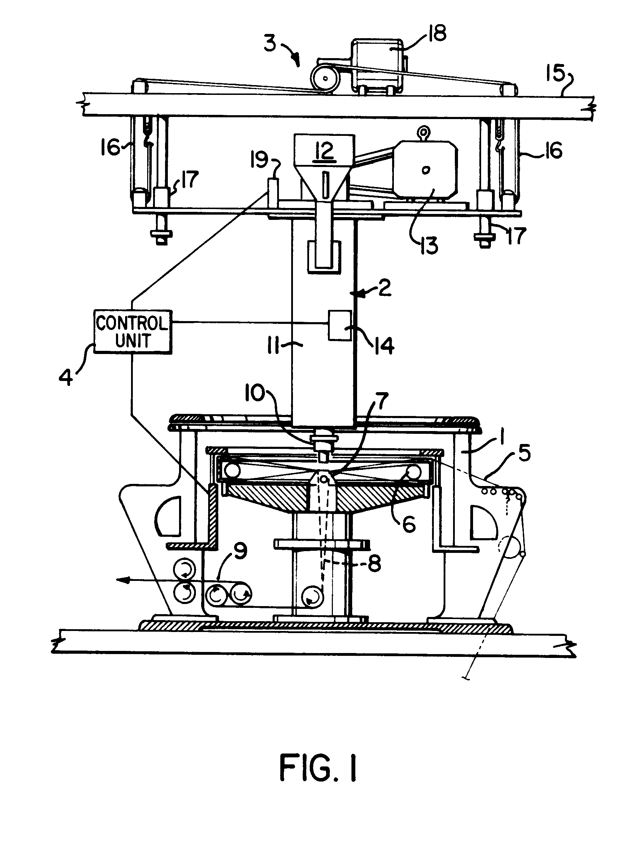

Referring to Figure 1, there is disclosed a circular loom 1, an extruder 2, an extruder elevating device 3, and a control unit 4.

The circular loom 1 is a conventional circular loom threaded with a multitude of warp ends 5 and a number of weft yarns 6 which are interwoven at the top of the weaving ring 7, the woven fabric 8 is removed from the circular loom 1 by a take off arrangement 9. The extruder 2 is comprised of a die 10, an extruder barrel 11, a feeder hopper 12 and drive means 13 and extruder control panel 14. The extruder barrel 11 and die 10 are suspended from extruder elevating device 3. Extruder elevating device 3 consists of a support frame 15, extruder suspending means 16, extruder guiding means 17, drive means 18 and extruder elevating device control panel 19. The control unit 4 receives information from the loom 1, the extruder control panel 14 and the elevating device control panel 19 analyses the information and controls the loom 1, extruder 2 and extruder elevating device 3.

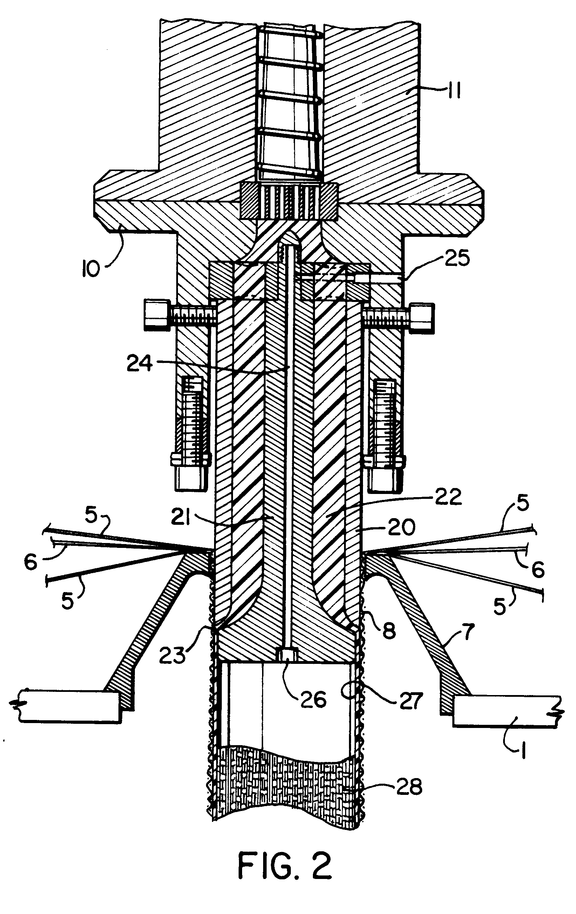

Referring to Figure 2 a more detailed representation of the extruder die 10 is shown. The extruder die 10 is attached to the barrel 11. The extruder die 10 includes outer walls 20 and mandrel 21 creating flow passage 22 therebetween exiting from the peripheral gap 23 at the bottom of flow passage 22. The extruder die 10 has incorporated therein a central channel 24 connected to inlet 25 on the exterior of the extruder die 10 and an outlet 26 at the bottom of mandrel 21.

Prior to commencement of weaving the extruder 2 is turned on to achieve the temperature necessary to extrude the coating material 27. Prior to commencement of the loom 1, the extruder 2 is lowered by extruder elevating device 3 into the woven fabric 8 within the weaving ring 7 and starts extruding. The loom 1 is started up and commences weaving and the extruder 2 continues to extrude coating material 27 through peripheral gap 23 on the interior of woven fabric 8. If loom 1, extruder 2 and extruder elevating device 3 operate satisfactorily the weaving and extrusion of the coating material 27 on woven fabric 8 produce coated woven tubular fabric 28. When the loom 1 or extruder 2 malfunction, or are stopped intentionally, control unit 4 will cause loom 1 to shut down and will cause extruder 2 to end extrusion and extruder elevating device 3 to remove the extruder barrel 11 and die 10 from the woven fabric 8 and the weaving ring 7.

## Claims

1. Apparatus for continuously extruding an elastomeric material (27) on the interior of a continuous tubular woven fabric (8) in a loom (1), comprising,

   loom means to provide a continuous tubular woven fabric (8),

   extruder means (2) capable of continuously extruding an elastomeric material (27), the extruder means including an extruder die means (10) positioned adjacent the loom (1) in a manner which enables the elastomeric material to be applied to the interior of the tubular woven fabric (8) upon being formed in the loom,

   motive means (3) for creating relative movement between the extruder (2) and the woven fabric (8),

   sensing means (19) for detecting stoppage of operation of the loom (1) and of the extruder means (2), and

control means (4) responsive to the sensing means (19) directing the motive means (3) to withdraw the extruder die means (10) from a position adjacent the loom (1) upon stoppage of operation of either the loom or the extruder means (2), the control means also directing the loom or the extruder means to cease operation upon cessation of operation of the other.

2. A method for continuously extruding an elastomeric material (27) on the interior of a continuous tubular woven fabric (8) in a loom (1), utilising motive means (3) for creating relative movement between an extruder means (2) and the woven fabric (8), sensing means (19) for detecting stoppage of operation of the loom (1) and of the extruder means (2), and control means (4) responsive to the sensing means (19), the method comprising the steps of,

weaving a continuous tubular woven fabric (8) in a loom (1),

extruding an elastomeric material by means of extruder means (10) positioned adjacent the loom (1) in a manner which causes the elastomeric material (27) to be applied to the interior of the tubular woven fabric (8) upon being formed in the loom,

sensing stoppage of operation of either the loom (1) or the extruder means (2),

withdrawing the extruder die means (10) from the position adjacent the loom (1) upon the stoppage of operation of either the loom or the extruder means (2), and

directing the loom (1) or the extruder (2) to cease operation upon cessation of operation of the other.

3. A method according to claim 2, in which the elastomeric material (27) is extruded on the interior and through the tubular woven fabric (8) to form a coating on the interior and exterior of the tubular woven fabric.

4. A method according to claim 2, in which the elastomeric material (27) is applied partially selectively to the interior of the continuous tubular woven fabric (8).

5. A tubular woven fabric (8) having an interior elastomeric layer (27) extruded directly onto the interior of the tubular woven fabric.

6. A tubular woven fabric (8) according to claim 5, in which the extruded interior elastomeric layer (27) substantially fills the undulations and cavities on the interior of the tubular woven fabric.

7. A tubular woven fabric (8) according to claim 5 in which the extruded interior elastomeric layer (27) fills the undulations and cavities on the interior tubular woven fabric providing a smooth interior surface.

8. A tubular woven fabric (8) according to claim 5, 6 or 7, in which the elastomeric material (27) is applied partially selectively to the interior of the continuous tubular woven fabric.

**Patentansprüche**

1. Vorrichtung zum kontinuierlichen Extrudieren eines elastomeren Materials (27) auf die Innenseite eines kontinuierlichen rohrförmigen gewebten Erzeugnisses (8) in einer Webmaschine (1), aufweisend,

eine Webeinrichtung zur Schaffung eines kontinuierlichen rohrförmigen gewebten Erzeugnisses (8),

eine Extrudereinrichtung (2), mit der kontinuierlich ein elastomeres Material (27) extrudierbar ist, welche Extrudereinrichtung eine Extruderdüseneinrichtung (10) umfasst, die nahe der Webmaschine (1) angeordnet ist, so dass das elastomere Material auf die Innenseite des rohrförmigen gewebten Erzeugnisses (8) aufgegeben werden kann, nachdem dieses in der Webmaschine gebildet worden ist,

eine Bewegungseinrichtung (3) zur Schaffung einer Relativbewegung zwischen dem Extruder (2) und dem gewebten Erzeugnis (8),

eine Sensoreinrichtung (19) zur Erfassung einer Unterbrechung des Betriebes der Webmaschine (1) und der Extrudereinrichtung (2), und

eine auf die Sensoreinrichtung (19) ansprechende Steuereinrichtung (4), die die Bewegungseinrichtung (3) veranlasst, die Extruderdüseneinrichtung (10) aus einer Position nahe der Webmaschine (1) bei Unterbrechung des Betriebes entweder der Webmaschine oder der Extrudereinrichtung (2) zurückzuziehen, wobei die Steuereinrichtung ferner veranlasst, den Betrieb der Webmaschine oder der Extrudereinrichtung bei Betriebsstillstand der jeweiligen anderen stillzusetzen.

2. Verfahren zum kontinuierlichen Extrudieren eines elastomeren Materials (27) auf die Innenseite eines kontinuierlichen rohrförmigen gewebten Erzeugnisses (8) in einer Webmaschine (1) unter Verwendung einer Bewegungseinrichtung (3) zur Schaffung einer Relativbewegung zwischen einer Extrudereinrichtung (2) und dem gewebten Erzeugnis (8), einer Sensoreinrichtung (19) zur Erfassung einer Betriebsunterbrechung der Webmaschine (1) und der Extrudereinrichtung (2) und einer auf die Sensoreinrichtung (19) ansprechenden Steuereinrichtung (4), welches Verfahren die Schritte umfasst,

Weben eines kontinuierlichen rohrförmigen gewebten Erzeugnisses (8) in einer Webmaschine (1),

Extrudieren eines elastomeren Materials mittels der nahe der Webmaschine (1) angeordneten Extrudereinrichtung (10) dergestalt, dass das elastomere Material (27) auf die Innenseite des rohrförmigen gewebten Erzeugnisses (8) aufgegeben wird, nachdem dieses in der Webmaschine ausgebildet worden ist,

Erfassen einer Betriebsstillstandes von entweder der Webmaschine (1) oder der Extrudereinrichtung (2),

Zurückziehen der Extruderdüseneinrichtung (10) aus der Position nahe der Webmaschine (1) bei Betriebsunterbrechung entweder der Webmaschine oder der Extrudereinrichtung (2), und

Einwirken auf die Webmaschine (1) oder den Extruder (2) dergestalt, dass der Betrieb bei Betriebsstillstand der jeweiligen anderen Einrichtung stillgesetzt wird.

3. Verfahren nach Anspruch 2, bei dem das elastomere Material (27) auf die Innenseite und durch das rohrförmige gewebte Erzeugnis (8) extrudiert wird, um auf der Innenseite und Aussenseite des rohrförmigen gewebten Erzeugnisses eine Beschichtung zu bilden.

4. Verfahren nach Anspruch 2, bei dem das elastomere Material (27) teilweise gezielt auf die Innenseite des kontinuierlichen rohrförmigen gewebten Erzeugnisses (8) aufgegeben wird.

5. Rohrförmiges gewebtes Erzeugnis (8) mit einer inseitigen elastomeren Schicht (27), die direkt auf die Innenseite des rohrförmigen gewebten Erzeugnisses extrudiert ist.

6. Rohrförmiges gewebtes Erzeugnis (8) nach Anspruch 5, bei dem die extrudierte inseitige elastomere Schicht (27) im wesentlichen die wellenförmigen Erhöhungen und Vertiefungen an der Innenseite des rohrförmigen gewebten Erzeugnisses ausfüllt.

7. Rohrförmiges gewebtes Erzeugnis (8) nach Anspruch 5, bei dem die extrudierte inseitige elastomere Schicht (27) die wellenförmigen Erhöhungen und Vertiefungen an der Innenseite des rohrförmigen gewebten Erzeugnisses unter Schaffung einer glatten inneren Oberfläche ausfüllt.

8. Rohrförmiges gewebtes Erzeugnis (8) nach Anspruch 5, 6 oder 7, bei dem das elastomere Material (27) teilweise gezielt auf die Innenseite des kontuierlichen rohrförmigen gewebten Erzeugnisses aufgegeben ist.

**Revendications**

1. Appareil pour extruder en continu une matière élastomère (27) sur la surface intérieure d'un tissu tubulaire continu (8) dans un métier (1), comprenant :

un moyen de tissage pour fournir un tissu tubulaire continu (8),

un moyen d'extrusion (2) capable d'extruder en continu une matière élastomère (27), le moyen d'extrusion comportant une filière d'extrusion (10) placée au voisinage du métier (1) d'une manière permettant à la matière élastomère d'être appliquée sur la surface intérieure du tissu tubulaire (8) pendant sa formation dans le métier,

un moyen moteur (3) pour produire un mouvement relatif entre le moyen d'extrusion (2) et le tissu (8),

un moyen détecteur (19) pour détecter un arrêt du fonctionnement du métier (1) et du moyen d'extrusion (2), et

un moyen de commande (4) qui est sensible au moyen détecteur (19) et qui ordonne au moyen moteur (3) d'écarter la filière d'extrusion (10) d'une position voisine du métier (1) lors d'un arrêt du fonctionnement du métier ou du moyen d'extrusion (2), le moyen de commande ordonnant aussi à l'un des deux éléments, à savoir le métier ou le moyen d'extrusion, de cesser de fonctionner lorsque l'autre élément a cessé de fonctionner.

2. Procédé pour extruder en continu une matière élastomère (27) sur la surface intérieure d'un tissu tubulaire continu (8) dans un métier (1), utilisant un moyen moteur (3) pour produire un mouvement relatif entre un moyen d'extrusion (2) et le tissu (8), un moyen détecteur (19) pour détecter un arrêt du fonctionnement du métier (1) et du moyen d'extrusion (2), et un moyen de commande (4) sensible au moyen détecteur (19), ce procédé comprenant les étapes consistant :

à tisser un tissu tubulaire continu (8) dans un métier (1),

à extruder une matière élastomère au moyen d'une filière d'extrusion (10) placée au voisinage du métier (1) d'une manière provoquant l'application de la matière élastomère (27) sur la surface intérieure du tissu tubulaire (8) en cours de formation dans le métier,

à détecter un arrêt du fonctionnemet soit du métier (1), soit du moyen d'extrusion (2),

à écarter la filière d'extrusion (10) de la position voisine du métier (1) lors de l'arrêt du fonctionnement soit du métier, soit du moyen d'extrusion (2), et

à ordonner à l'un des deux éléments, à savoir le métier (1) et le moyen d'extrusion (2), de cesser de fonctionner lorsque l'autre élément a cessé de fonctionner.

3. Procédé selon la revendication 2, dans lequel la matière élastomère (27) est extrudée sur la surface intérieure et à travers le tissu tubulaire (8) afin de former un revêtement sur les surfaces intérieure et extérieure du tissu tubulaire.

4. Procédé selon la revendication 2, dans lequel la matière élastomère (27) est appliquée partiellement et de manière sélective sur la surface intérieure du tissu tubulaire continu (8).

5. Un tissu tubulaire (8) ayant une couche intérieure élastomère (27) extrudée directement sur la surface intérieure du tisssu tubulaire.

6. Tissu tubulaire (8) selon la revendication 5, dans lequel la couche intérieure élastomère extrudée (27) remplit substantiellement les ondulations et les cavités sur la surface intérieure du tissu tubulaire.

7. Tissu tubulaire (8) selon la revendication 5, dans lequel la couche intérieure elastomère extrudée (27) remplit les ondulations et es cavités dans la surface intérieure du tissu tubulaire, en donnant une surface intérieure lisse.

8. Tissu tubulaire (8) selon la revendication 5, 6 ou 7, dans lequel la matière élastomère (27) est appliquée partiellement et de manière sélective sur la surface intérieure du tissu tubulaire continu.

FIG. I

FIG. 2